# DEMANDE DE BREVET EUROPEEN

(11) **EP 0 788 967 A2**
(43) Date de publication de la demande: **13.08.1997**
(21) Numéro de dépôt: 96401976.4
(22) Date de dépôt: 18.09.1996
(51) Int. Cl.: B62H 5/00, B62H 1/00

(54) **Dispositif antivol pour véhicule motorisé à deux roues**

(30) Priorité: 19.09.1995 FR 9510939
(71) Demandeur: Dalmasso, Marc, 94140 Alfortville (FR); Devaud, Gérard Lucien, 75015 Paris (FR)
(72) Inventeur: Dalmasso, Marc, 94140 Alfortville (FR); Devaud, Gérard Lucien, 75015 Paris (FR)
(74) Mandataire: Vander-Heym, Serge

(57) **Abrégé**

Dispositif antivol pour véhicule motorisés à deux roues, caractérisé en ce qu'il comporte un organe de verrouillage (3), rendu solidaire du bâti du véhicule, susceptible de s'opposer au déplacement de ce dernier.

L'organe de verrouillage s'oppose à l'escamotage de la béquille (1) usuelle.

La mise en oeuvre de l'organe de verrouillage est effectuée, automatiquement, dès le retrait de la clef de contact du véhicule.

## Description

La présente invention est relative à un dispositif antivol pour véhicules motorisés à deux roues.

Les antivols connus à ce jour sont de deux types.

Le premier type comprend tous les moyens mécaniques permettant d'immobiliser une roue d'un véhicule ou d'attacher ce dernier à un point fixe. Ces dispositifs sont d'un emploi fastidieux pour l'usager qui, bien souvent, omet de les utiliser pour un arrêt d'une durée brève. Il y a lieu de noter, aussi, qu'il est toujours possible de couper une chaîne ou un câble.

Le second type comprend les moyens faisant appel à un dispositif électronique pour empêcher le démarrage du moteur et, ou, pour déclencher une alarme sonore.

Pour renforcer la protection, les dispositifs ci-dessus sont généralement utilisés en combinaison.

Compte tenu du fait que l'expérience a montré que les dispositifs mécaniques (chaîne ou câble) pouvaient être violés, il s'avère qu'il n'existe pas sur le marché de dispositif antivol s'opposant de façon fiable au déplacement du véhicule. Il est bien connu, cependant que de nombreux vols sont perpétrés de cette façon, le moteur étant à l'arrêt.

La présente invention, qui remédie à ces inconvénients, est relative à un dispositif antivol caractérisé en ce qu'il fait appel à un organe de verrouillage, faisant corps avec le bâti du véhicule, susceptible de s'opposer au déplacement dudit véhicule.

L'organe de verrouillage, lorsqu'il est utilisé, s'oppose à l'escamotage de la béquille. De cette façon, il est quasiment impossible de déplacer le véhicule.

Des moyens sont prévus pour que la mise en oeuvre de l'organe de verrouillage s'effectue automatiquement lors de l'arrêt du moteur. Des moyens sont également prévus pour que l'action de l'organe de verrouillage cesse dès la mise en route du moteur.

Selon un mode de réalisation, la béquille présente, en un point éloigné de son axe d'articulation, un logement dans lequel peut pénétrer un doigt de verrouillage.

La présente invention sera mieux comprise par la description qui va suivre faite en se référant aux dessins annexés à titre d'exemple indicatif, seulement, sur lesquels :
- la figure 1 est une vue en élévation d'une béquille modifiée selon l'invention;
- la figure 2 est une vue en coupe, effectuée selon la ligne II-II de la figure 1, montrant, notamment, l'organe de verrouillage;
- la figure 3 est un schéma électrique montrant la commande de l'organe de verrouillage;
- la figure 4 est une vue, analogue à celle 3, montrant les circuits dans un autre état électrique;
- la figure 5 est une vue partielle montrant un organe mécanique utilisé en combinaison avec les circuits de la figure 3 dans une autre position que celle montrée sur ladite figure.

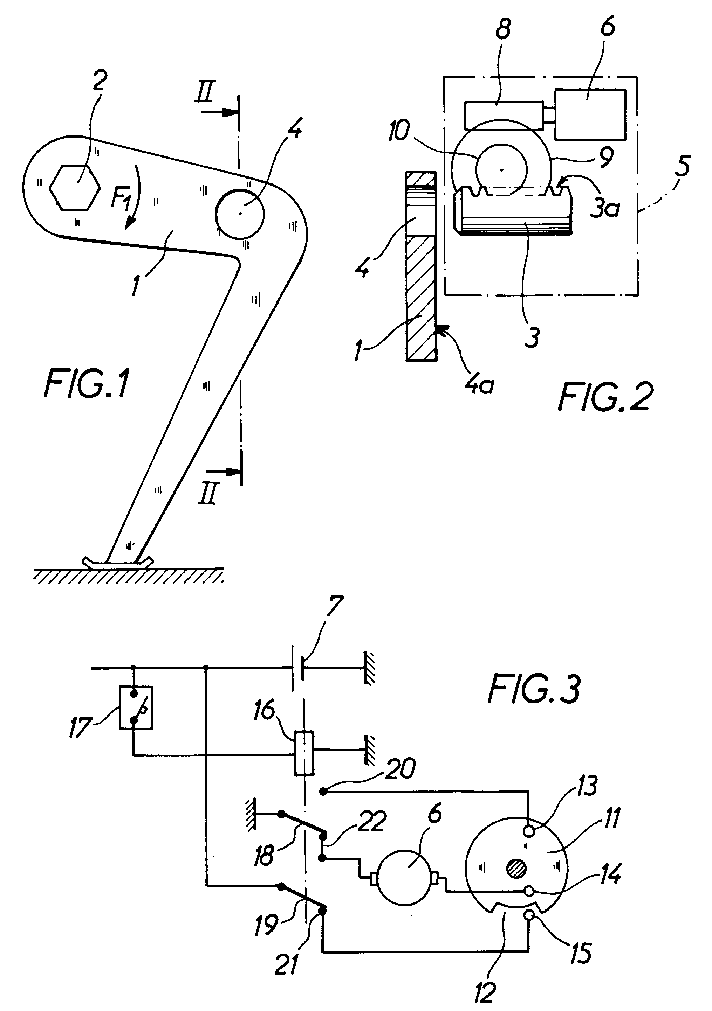

En se reportant à la figure 1, on voit que la béquille 1 affecte sensiblement la forme du chiffre sept et est articulée par un axe 2 au bâti du véhicule (non représenté).

Dans la position représentée sur la figure 1, la béquille 1 est en appui sur le sol, et l'une des roues du véhicule est soulevée. Pour utiliser le véhicule, il faut escamoter la béquille 1 en la faisant pivoter selon la flèche F₁.

Le but de l'invention est de prévoir un moyen s'opposant fermement au pivotement précité de façon à rendre quasiment impossible le déplacement du véhicule.

Ce moyen est constitué par un organe de verrouillage se présentant, dans l'exemple représenté, par un doigt 3, susceptible de coulisser selon son axe et de pénétrer dans un logement 4 prévu sur la béquille 1. Lorsque le doigt 3 est engagé dans le logement 4, l'escamotage de la béquille est impossible. Dans ce qui va suivre cette position du doigt sera dénommée "position verrouillée".

Le doigt 3 est guidé dans un boîtier schématisé en 5 et rendu solidaire du bâti du véhicule. Dans l'exemple représenté, le logement 4 est constitué par un trou débouchant sur la face externe de la béquille, mais on peut concevoir que ledit logement 4 soit constitué par un trou borgne, prévu sur la face interne 4**a** de ladite béquille, de façon à masquer l'extrémité du doigt 3.

Selon un mode de réalisation, le déplacement du doigt 3 est commandé par un moteur électrique 6 alimenté par la batterie 7 du véhicule. Le moteur entraîne une vis tangente 8 en prise avec une roue dentée 9 entraînant une roue dentée 10, de plus petit diamètre, en prise avec une crémaillère 3**a** portée par le doigt 3.

Des moyens sont prévus pour inverser le sens de rotation du moteur et pour commander l'arrêt de celui-ci en fin de course. Ces moyens vont être décrits en regard des figures 3 à 5.

Le moteur 6, entraîne un disque 11, présentant à sa périphérie une échancrure 12. Selon un mode de réalisation, le disque 11 est calé sur l'axe de la roue 10. Ce disque constitue un organe de connexion et présente trois contacts glissants 13,14 et 15. Cet ensemble constitue, comme on le verra plus loin, les moyens pour arrêter le moteur en fin de course.

Le dispositif est complété par un relais 16 sur le circuit d'alimentation duquel est interposé un interrupteur 17. Cet interrupteur peut être celui usuel de commande du circuit d'allumage du dispositif qui est placé sous la dépendance de la clef de contact. Lorsque la clef est en place, l'interrupteur 17 est fermé et il s'ouvre automatiquement lors du retrait de ladite clef.

Le relais 16 peut provoquer le pivotement de deux contacts 18 et 19 dont l'un est relié à la masse et l'autre à la borne positive de la batterie 7.

La borne de travail 20 du contact 18 est connectée au contact 13. La borne de repos 21 du contact 19 est connectée au contact 15. La borne commune 22 est connectée à l'une des bornes du moteur dont l'autre borne est connectée au contact 14.

La figure 3 correspond à la position occupée par les organes mobiles lorsque le doigt 3 est en position verrouillée et qui correspond à la position selon laquelle le véhicule n'est pas utilisé et selon laquelle l'escamotage de la béquille est impossible : le dispositif antivol de l'invention est en action.

Avant d'utiliser le véhicule, il faut escamoter le doigt 3 pour l'amener dans la position représentée sur la figure 2, donc alimenter le moteur 6. Cette action se déroule automatiquement dès la fermeture de l'interrupteur 17, lors de l'introduction de la clef de contact.

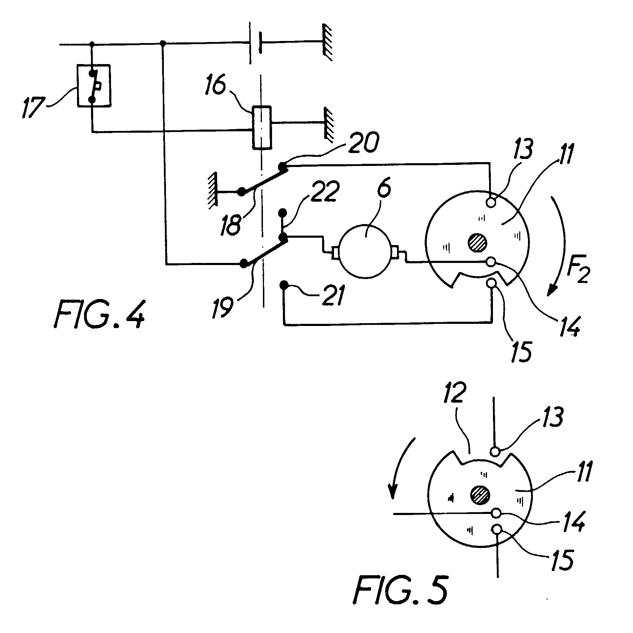

A ce moment le relais 16 est excité et les contacts 18 et 19 basculent en position de travail, comme cela ressort de la figure 4. Le moteur est connecté à la borne positive de la batterie par le contact 19 et à celle négative par le contact 14, le disque 11, le contact 13 et la borne de travail 20 du contact 18.

La rotation du moteur a pour effet de commander l'escamotage du doigt 3 et la rotation du disque 11 selon la flèche F₂. Cette situation se poursuit jusqu'au moment où le contact 13 "tombe" dans l'échancrure 12 en provoquant l'arrêt du moteur, c'est la position représentée sur la figure 5.

Lors d'un nouvel arrêt du véhicule, celui-ci est placé sur sa béquille et l'usager retire la clef de contact, l'interrupteur 17 s'ouvre et le relais 16 chute ce qui signifie que les contacts 18 et 19 se retrouvent dans la position de la figure 3. Cependant, comme le disque 11 se trouve dans la position représentée sur la figure 5, le moteur se trouve alimenté mais avec une polarisation inverse et il entraîne le doigt 3 pour le placer en position verrouillée jusqu'au moment où le disque 11 occupe, à nouveau, la position représentée sur la figure 3. et ainsi de suite.

Il est à noter que le moteur n'est alimenté que durant le temps nécessaire pour déplacer le doigt 3 et que, de ce fait, la consommation d'énergie résultant de l'utilisation du dispositif de l'invention est négligeable.

Il est à noter de plus que si un disfonctionnement survient durant l'utilisation du véhicule celui-ci sera sans influence sur la sécurité puisque durant les déplacements la béquille est escamotée.

## Revendications

1. Dispositif antivol pour véhicule motorisé à deux roues, comportant un doigt (3), mobile axialement, pour pénétrer dans un logement (4) de la béquille (1), caractérisé en ce que le déplacement du doigt (3), dans un sens ou dans l'autre, est commandé par un moteur électrique (6) alimenté par la batterie usuelle (7) du véhicule.

2. Dispositif selon la revendication 1, caractérisé en ce que le moteur électrique est alimenté uniquement durant le temps nécessaire au déplacement du doigt (3).

3. Dispositif selon l'une quelconque des revendications 1 et 2, caractérisé en ce que le moteur électrique (6) entraîne une vis tangente (8) en prise avec une roue dentée (9), entraînant une roue dentée (10), de plus petit diamètre, en prise avec une crémaillère (3a) portée par le doigt (3).

4. Dispositif selon l'une quelconque des revendications 1 à 3, caractérisé en ce que des moyens sont prévus pour provoquer l'inversion du sens de rotation du moteur et pour provoquer son arrêt en fin de course.

5. Dispositif selon la revendication 4, caractérisé en ce que le moteur entraîne un disque (11) sur lequel frottent trois contacts (13,14 et 15), dont l'un (14) est connecté en permanence à l'une des bornes du moteur tandis que les deux autres peuvent "tomber", alternativement, dans une échancrure dudit disque, cet ensemble constituant un moyen d'arrêt en fin de course.

6. Dispositif selon la revendication 5, caractérisé en ce que la mise en place de la clef de contact usuelle a pour effet de provoquer l'excitation d'un relais (16) dont les contacts (18,19) sont connectés, pour le premier (18), à la masse du véhicule et, pour le second (19), à la borne positive de la batterie, ces deux contacts coopérant, en position de repos, avec des bornes (22,21) connectées respectivement à l'une des bornes du moteur et au contact glissant (15) et coopérant, en position de travail, avec une borne (20), pour le contact (18), connectée au contact glissant (13) et pour celui (19) avec la borne commune (22), l'autre borne du moteur étant connectée au contact (14).
